# EUROPÄISCHE PATENTSCHRIFT

(11) **EP 1 477 610 B1**
(45) Veröffentlichungstag und Bekanntmachung des Hinweises auf die Patenterteilung: **29.10.2008**
(21) Anmeldenummer: 04011123.9
(22) Anmeldetag: 11.05.2004
(51) Int. Cl.: E01C 23/06, E01C 23/082, E01C 21/00, E01H 3/02, A01B 35/32, A01B 49/02, A01B 51/04

(54) **Gerät für die Pflege von Reitböden**
Apparatus for the maintenance of riding grounds
Dispositif d'entretien de terrain d'équitation

(30) Priorität: 16.05.2003 DE 20307668 U; 15.01.2004 DE 202004000535 U
(43) Veröffentlichungstag der Anmeldung: 17.11.2004
(73) Patentinhaber: Rampelmann & Spliethoff OHG, 48361 Beelen (DE)
(72) Erfinder: Rampelmann, Paul, 48361 Beelen (DE); Hartmann, Dirk, 48361 Beelen (DE)
(74) Vertreter: Linnemann, Winfried

(56) Entgegenhaltungen:
- DE-A1- 3 032 275
- GB-A- 2 029 475
- US-A- 2 870 554
- US-A- 3 782 634
- US-A- 3 970 012
- US-A- 4 677 787

## Beschreibung

Die Erfindung betrifft ein Gerät für die Pflege von Reitböden, insbesondere in Reithallen und auf Reitplätzen, wobei das Gerät mittels eines Zug- oder Tragfahrzeugs, an das es ankoppelbar ist, über den Reitboden verfahrbar ist, wobei das Gerät Mittel zum Lockern, Mischen, Glätten, Krümeln und/oder Verdichten des Reitbodens aufweist, wobei das Gerät weiterhin mindestens eine Düsenanordnung aufweist, durch welche während des Verfahrens des Geräts Wasser zum Befeuchten des Reitbodens auf und/oder in diesen ausbringbar ist und wobei das Gerät in seiner Verfahrrichtung gesehen vorne mit Kupplungselementen ausgestattet ist, die mit wenigstens einer genormten Kupplung des Zug- oder Tragfahrzeugs lösbar verbindbar sind.

Geräte für den eingangs genannten Zweck sind in Ausführungen ohne Düsenanordnung aus der Praxis bekannt und haben sich bei der Pflege von Reitböden bewährt. Bei im Freien liegenden Reitböden, insbesondere auf Reitplätzen, ist neben dem Lockern, Mischen, Glätten, Krümeln und/oder Verdichten des Reitbodens eine weitere Pflege in der Regel nicht erforderlich.

Im Unterschied dazu ist aber bei Reitböden, die in Reithallen liegen, eine regelmäßige Befeuchtung erforderlich. Durch die Zuführung von Wasser soll der Boden in einem günstigen Bereich hinsichtlich seiner Feuchtigkeit gehalten werden. Hierdurch wird zum einen eine übermäßige Staubentwicklung durch über den Reitplatz laufende Pferde oder Ponys vermieden. Zum anderen werden so die Eigenschaften des Bodens durch eine Verstärkung des Zusammenhalts der Bodenpartikel für die darauf laufenden Pferde oder Ponys verbessert.

Bisher werden in Reithallen zur Befeuchtung des Reitbodens üblicherweise entweder an der Decke der Reithalle angeordnete Sprinkleranlagen oder handgeführte Regnerdüsen eingesetzt. Bei Sprinkleranlagen entsteht durch die hohe Fallhöhe der Wassertropfen von der Reithallendecke bis auf den Reitboden eine hohe Verdunstung, die zu einer unangenehmen hohen Luftfeuchtigkeit und zu einer ungünstigen Verschlammung der Reitbodenoberfläche führt. Zudem erfordert eine Sprinkleranlage einen hohen Installationsaufwand und damit hohe Investitionskosten. Die Kosten sind zwar bei handgeführten Regnerdüsen wesentlich niedriger, jedoch entsteht in der Regel bei handgeführten Regnerdüsen eine ungleichmäßige Wasserverteilung, wodurch die Eigenschaften des Reitbodens inhomogen werden.

Das Dokument US 3 970 012 A zeigt eine Vorrichtung der eingangs genannten Art, bei der zwei mit Zinken bestückte Wellen den Boden aufreißen und auflockern. Mittels eines nachlaufenden elastischen Lappens wird die Oberfläche geglättet. An der Vorderseite der Vorrichtung ist hier ein Schlauch mit einer Sprühdüse vorgesehen, durch den eine Flüssigkeit, hier konkret ein chemisches Behandlungsmittel, auf den Boden ausgesprüht werden kann. Die Vorrichtung dient dazu, das ausgebrachte Behandlungsmittel in den Boden einzuarbeiten, bevor Pflanzen gesetzt werden. Über eine im landwirtschaftlichen Bereich übliche Kupplung ist die Vorrichtung mit einem Zugfahrzeug verbindbar. Dabei kann die Vorrichtung so ausgeführt sein, dass sie in Vertikalrichtung schwimmend geführt ist, damit sie Bodenunebenheiten folgen kann. Die Vorrichtung hat eine relativ kleine Bearbeitungsbreite, sodass bei Kurvenfahrt kein weites Ausschwenken der in seitlicher Richtung starr mit dem Zugfahrzeug verbundenen Vorrichtung auftritt. Eine Verwendung der bekannten Vorrichtung als Gerät für die Pflege von Reitböden ist zwar im Prinzip möglich, jedoch führt dessen geringe Bearbeitungsbreite zu einem unwirtschaftlichen Arbeiten der Vorrichtung. Eine Verbreiterung der Vorrichtung zur Erzielung einer größeren Bearbeitungsbreite wäre zwar möglich, würde aber dann zu dem Problem führen, dass die Vorrichtung bei Kurvenfahrt seitlich weit ausschwenkt, was zu einer erheblichen Gefahr einer Beschädigung der Vorrichtung selbst und seitlich des Bewegungsweges der Vorrichtung befindlicher Gegenstände, wie Reitplatzbanden oder Hindernisaufbauten, führt.

Das Dokument GB 2 029 475 A zeigt eine Vorrichtung zum Bearbeiten von harten, porösen Oberflächen von Sportplätzen, die an einen Schlepper ankuppelbar ist. Die Vorrichtung besitzt in betriebsmäßiger Folge und jeweils quer zur vorgesehenen Arbeitsrichtung einen Rechen, ein Planiergerät für kleinteiliges Material, eine Rolle und eine Bürste. Weiter sind Mittel zum Steuern der Betriebsstellung des Planiergerätes vorgesehen. Außerdem können justierbare Träger zur höhenjustierbaren Aufnahme der Rolle vorgesehen sein. Zum Kuppeln der Vorrichtung mit dem Schlepper dient eine Dreipunktkupplung, mittels der die Vorrichtung zugleich heb- und senkbar ist. Eine Verwendung dieser bekannten Vorrichtung als Gerät für die Pflege von Reitböden ist zwar grundsätzlich möglich, jedoch führt dessen relativ große Bearbeitungsbreite in Verbindung mit der in seitlicher Richtung starren Kupplung an den Schlepper zu dem Problem, dass die Vorrichtung bei Kurvenfahrt seitlich weit ausschwenkt. Dies führt dann auch bei dieser Vorrichtung zu einer großen Gefahr einer Beschädigung der Vorrichtung selbst und seitlich des Bewegungsweges der Vorrichtung befindlicher Gegenstände, wie Reitplatzbanden oder Hindernisaufbauten. Zudem besitzt diese Vorrichtung keine Mittel für eine Befeuchtung des Bodens.

Für die vorliegende Erfindung stellt sich deshalb die Aufgabe, ein Gerät der eingangs genannten Art zu schaffen, das die Nachteile des Standes der Technik vermeidet und mit dem insbesondere bei Kurvenfahrt Beschädigungsgefahren für das Gerät selbst und für seitlich des Bewegungsweges der Vorrichtung befindliche Gegenstände vermieden werden und mit der zugleich für die Einstellung einer gewünschten Bodenfeuchtigkeit des mit dem Gerät gepflegten Reitbodens gesorgt werden kann.

Die Lösung dieser Aufgabe gelingt erfindungsgemäß mit einem Gerät der eingangs genannten Art, das dadurch gekennzeichnet ist,
- dass das Gerät als erstes Kupplungselement eine Dreipunktkupplung aufweist, die geräteseitig mit einem einen Wasservorratsbehälter tragenden, oberen Tragrahmen verbunden ist,
- dass das Gerät als zweites Kupplungselement eine Anhängerkupplung aufweist, die geräteseitig mit einem die Mittel zum Lockern, Mischen, Glätten, Krümeln und/oder Verdichten des Reitbodens und die Düsenanordnung tragenden, unteren Geräterahmen, der in seinem hinteren Bereich rollend auf dem Untergrund abstützbar ist, verbunden ist, und
- dass der untere Geräterahmen relativ zum oberen Tragrahmen in Horizontal- und Vertikalrichtung um die Anhängerkupplung verschwenkbar ist.

Mittels seiner Kupplungselemente kann das Gerät einfach mit einem Zug- oder Tragfahrzeug gekoppelt und von diesem entkoppeln werden und es kann mit verschiedenen Zug- und Tragfahrzeugen genutzt werden. Durch das erste und das zweite Kupplungselement wird erreicht, dass der Teil des Gerätes, der die Mittel zum Lockern, Mischen, Glätten, Krümeln und/oder Verdichten des Reitbodens und die Düsenanordnung trägt, wie ein Anhänger hinter dem Zugfahrzeug herläuft, dabei aber vom Gewicht des Wasservorratsbehälters entlastet ist. Dadurch wird ein ungünstiges weites Ausschwenken des hinteren Endes des Gerätes bei Kurvenfahrt vermieden und das Führen des Gerätes mit dem Zugfahrzeug wird vereinfacht. Außerdem wird so die Gefahr von Schäden an Reitplatzbanden und am Gerät vermindert. Das Gewicht des Wasservorratsbehälters, der insbesondere im gefüllten Zustand sehr schwer ist, wird unmittelbar vom Zug- und Tragfahrzeug aufgenommen, so dass das aktuelle Gewicht des Wasservorratsbehälters die Wirkung des Gerätes auf den Reitboden nicht beeinflusst. Gleichzeitig ist das gezielte Befeuchten des Reitbodens in die Funktion des Gerätes integriert. Hierdurch erfordert das Befeuchten des Reitbodens keinen zusätzlichen Zeitaufwand. Dabei ermöglicht das erfindungsgemäße Gerät eine sowohl über die Fläche als auch über die Tiefe des Reitbodens gleichmäßige Befeuchtung, was zu günstigen Eigenschaften des Reitbodens führt. Der Abstand der Düsenanordnung zum Reitboden ist hier sehr klein, wodurch eine unerwünschte Erhöhung der Luftfeuchtigkeit in einer Reithalle vermieden wird.

Eine vorteilhafte Ausgestaltung sieht vor, dass der Tragrahmen mittels der Dreipunktkupplung vom Zug- oder Tragfahrzeug aus höhenverstellbar ist und dass vom Tragrahmen mindestens ein flexibles Hebeelement, vorzugsweise eine Kette oder ein Seil, nach unten zum Geräterahmen geführt ist. In dieser Ausführung kann die fahrzeugseitige, höhenverstellbare Dreipunktkupplung dazu genutzt werden, auf einfache Weise dem Geräterahmen und den daran gehalterten Mitteln für die Reitbodenpflege einen gewünschten und jeweils optimalen Abstand vom Reitboden zu geben. Die Verstellung kann dabei durch den Fahrzeugführer von seinem Bedienplatz aus erfolgen, also ohne dass er das Fahrzeug verlassen und am Gerät irgendwelche Verstellhandgriffe ausführen muss.

In weiterer Ausgestaltung ist vorgesehen, dass der Wasservorratsbehälter über eine Wasserleitung in Form mindestens eines flexiblen Schlauchs mit der Düsenanordnung verbunden ist. In dieser Ausgestaltung ist das Gerät hinsichtlich seiner Wasserversorgung autark und muss lediglich gelegentlich aufgetankt werden. Dabei erlauben die flexiblen Schläuche die Gelenkigkeit des Geräterahmens relativ zum Tragrahmen ohne Gefahr von Leitungsschäden. Das Zug- oder Tragfahrzeug muss keinen eigenen Wasservorratsbehälter haben.

Weiter ist bevorzugt vorgesehen, dass im Verlauf der Wasserleitung zwischen dem Wasservorratsbehälter und der Düsenanordnung eine Wasserpumpe vorgesehen ist. Mit der Wasserpumpe kann das Wasser unter einem erhöhten Druck der Düsenanordnung zugeführt werden, wodurch eine gezielte und besonders gleichmäßige Ausbringung des Wassers aus der Düsenanordnung ermöglicht wird. Dies fördert eine gleichmäßige Verteilung des Wassers innerhalb des Reitbodens und sorgt so für eine besonders homogene Befeuchtung.

Alternativ wird vorgeschlagen, dass der Wasservorratsbehälter dicht verschließbar und durch eine Luftpumpe unter Druck setzbar ist. In dieser Ausgestaltung sorgt ein Druckluftpolster innerhalb des dann natürlich geschlossenen Wasservorratsbehälters für einen erhöhten Druck des Wassers, so dass auch hier das Wasser mittels der Düsenanordnung gut verteilt werden kann.

Um den Aufwand für den Antrieb der Wasserpumpe oder der Luftpumpe möglichst gering zu halten, ist bevorzugt vorgesehen, dass die Wasserpumpe oder die Luftpumpe vom Zug-oder Tragfahrzeug antreibbar ist.

Eine vorteilhafte Weiterbildung des erfindungsgemäßen Gerätes sieht vor, dass der Druck des der Düsenanordnung zugeführten Wassers und/oder die Menge des von der Düsenanordnung ausgebrachten Wassers durch eine Einstelleinrichtung regulierbar sind/ist. Mittels der Einstelleinrichtung kann die erzielte Befeuchtung des Reitbodens exakt und reproduzierbar eingestellt werden, so dass zuverlässig eine gleichbleibende Qualität des Reitbodens hinsichtlich seines Feuchtegehalts erzielbar ist.

Ergänzend kann dabei der Einstelleinrichtung eine Anzeigeeinrichtung zur Anzeige des Wasserdrucks und/oder der Wasserdurchflussmenge zugeordnet sein. Hiermit erhält eine Bedienungsperson des Gerätes Informationen über die für den Betrieb des Gerätes hinsichtlich der Bodenbefeuchtung wesentlichen Parameter, nach denen die Bedienungsperson die Einstelleinrichtung justieren kann.

Damit die Bedienungsperson des Gerätes auch bei dessen Einsatz bedarfsweise die Einstelleinrichtung verstellen und die Anzeigeneinrichtung ablesen kann, ist bevorzugt vorgesehen, dass die Einstelleinrichtung im Griffbereich und/oder die Anzeigeeinrichtung im Sichtbereich einer das Gerät oder das zugehörige Zug- oder Tragfahrzeug führenden Bedienungsperson angeordnet ist.

In einer bevorzugten Ausgestaltung ist die Düsenanordnung durch mindestens ein quer zur Verfahrrichtung des Gerätes verlaufendes Düsenrohr mit mehreren in Rohrlängsrichtung voneinander beabstandet angeordneten Düsen gebildet. Ein Düsenrohr zur Bildung der Düsenanordnung ist auf der einen Seite ein technisch einfaches und leicht in das Gerät integrierbares Bauteil und bietet zugleich eine günstige Anordnung der Düsen, um den von dem Gerät überfahrenen Streifen des Reitbodens über dessen Breite gleichmäßig zu befeuchten.

Zur Optimierung der Funktion der Düsen ist weiter vorgesehen, dass diese individuell in ihrer Strahlform und/oder Strahlrichtung einstellbar sind.

Weiterhin weist das erfindungsgemäße Gerät vorzugsweise zwei oder mehr in Verfahrrichtung des Gerätes voneinander beabstandete, parallel zueinander verlaufende Düsenrohre auf. Hierdurch wird insbesondere erreicht, dass unterschiedliche Bereiche des Reitbodens von den verschiedenen Düsenrohren und den daran vorgesehenen Düsen befeuchtet werden, was eine intensive und durchgehende Befeuchtung des Reitbodens gewährleistet. Eine unerwünschte Verschlammung der Oberfläche des Reitbodens ohne eine wirksame Befeuchtung von dessen unteren Bereichen wird so besonders wirksam vermieden.

In konkreter Weiterbildung ist dabei bevorzugt ein erstes Düsenrohr im Bereich der Mittel zum Lockern und/oder Mischen des Reitbodens und ein zweites Düsenrohr im Bereich der Mittel zum Krümeln des Reitbodens angeordnet. Das erste Düsenrohr versorgt dann in erster Linie den tieferen Bereich und das zweite Düsenrohr überwiegend den oberen Bereich des Reitbodens mit Feuchtigkeit.

Zweckmäßig ist das/jedes Düsenrohr relativ zum übrigen Gerät in seiner Lage und/oder Ausrichtung verstellbar und in einer gewünschten Lage und/oder Ausrichtung fixierbar. In dieser Ausgestaltung kann die Funktion des Gerätes hinsichtlich des Ortes und der Richtung des Auftreffens der Wasserstrahlen auf den Reitboden justiert und funktional optimiert werden. Die optimale Einstellung wird dabei zweckmäßig durch Versuche ermittelt, wobei die Einstellung abhängig beispielsweise von der Art der Zusammensetzung des Reitbodens oder von dessen Dicke variieren kann.

Weiter schlägt die Erfindung vor, dass das Gerät in seiner Verfahrrichtung gesehen von vorne nach hinten aufeinander folgend mindestens eine Reihe von federnden, höheneinstellbaren Striegelzinken als Mittel zum Lockern und Mischen des Reitbodens, ein pendelnd aufgehängtes, höhenverstellbares Planierschild als Mittel zum Glätten des Reitbodens und entweder eine an Längslenkern geführte, nachlaufende Krümlerwalze als Mittel zum Krümeln des Reitbodens oder eine an Längslenkern geführte, nachlaufende Glattwalze als Mittel zum weiteren Glätten und Verdichten des Reitbodens aufweist. Die genannten Mittel zum Lockern, Mischen, Glätten, Krümeln und/oder Verdichten des Reitbodens sind auf der einen Seite technisch einfach und bei geringem Wartungsaufwand lange haltbar und auf der anderen Seite wirksam in ihrer Funktion. Damit ist das Gerät bei einer einfachen und kostengünstigen Konstruktion robust und betriebssicher und sehr wirksam und es kann flexibel an unterschiedliche Reitböden angepasst werden. Wenn das Gerät sowohl zum Herstellen eines gekrümelten als auch eines geglätteten Reitbodens eingesetzt werden soll, ohne dass jeweils ein aufwendiger Tausch zwischen Krümlerwalze und Glattwalze erfolgen soll, kann von unten her auf die Krümlerwalze eine außen glatte, im Querschnitt etwa halbkreisförmige und an den Durchmesser der Krümlerwalze angepasste Wanne aufgesetzt und lösbar fixiert werden, z.B. mit Steckbolzen. Beim Verfahren des Geräts gleitet die Wanne über den Reitboden und glättet dessen Oberfläche bei gleichzeitiger leichter Bodenverdichtung.

Eine Ausgestaltung des Gerätes mit Glattwalze sieht vor, dass die als Mittel zum weiteren Glätten und Verdichten des Reitbodens dienende Glattwalze mit mindestens einem Abstreifer ausgestattet ist. Der Abstreifer sorgt für eine stets saubere Oberfläche der Glattwalze und damit für eine stets glattflächige Reitbodenoberfläche hinter der Glattwalze nach der Bodenpflege.

Ein Ausführungsbeispiel der Erfindung wird im Folgenden anhand einer Zeichnung erläutert. Die Figuren der Zeichnung zeigen:
- Figur 1: ein Gerät für die Pflege von Reitböden, in einem an ein Zug- und Tragfahrzeug angekoppelten Zustand, in Seitenansicht,
- Figur 2a: das Gerät aus Figur 1 ohne Zug- und Tragfahrzeug, in Draufsicht bei Geradeausfahrt,
- Figur 2b: das Gerät aus Figur 1 ohne Zug- und Tragfahrzeug, in Draufsicht bei Kurvenfahrt, und
- Figur 3: das Gerät aus Figur 1 in Rückansicht.

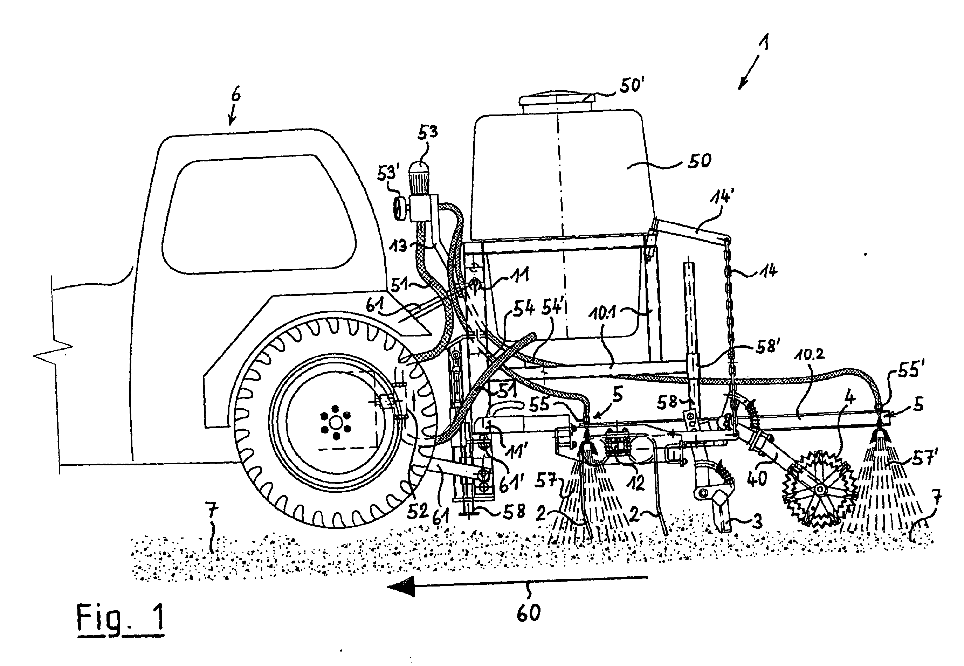

Figur 1 zeigt ein Gerät 1 für die Pflege von Reitböden 7, das an ein Tragfahrzeug 6, hier ein kleiner landwirtschaftlicher Schlepper, der nur teilweise sichtbar ist, angebaut ist. Im Betrieb wird das Gerät 1 durch das Tragfahrzeug 6 getragen und gezogen und in Verfahrrichtung 60 über den Reitboden 7 bewegt.

An seiner Unterseite besitzt das Gerät 1 verschiedene Mittel 2, 3, 4 zum Lockern, Mischen, Glätten und Krümeln des Reitbodens 7. Die Mittel 2 sind durch zwei quer zur Verfahrrichtung 60 verlaufende Reihen von Striegelzinken gebildet, die federnd und höhenverstellbar an einem Geräterahmen 10.2 gehalten sind. Diese Mittel 2 sorgen bei der Bewegung des Gerätes 1 für ein intensives Lockern und Mischen des Reitbodens 7, wobei die Striegelzinken aufgrund ihrer federnden Eigenschaften bei der Bewegung des Gerätes 1 wie ein Quirl wirken.

In Verfahrrichtung 60 gesehen hinter den Mitteln 2 ist als Mittel 3 zum Glätten des Reitbodens 7 ein Planierschild vorgesehen, das höhenverstellbar sowie pendelnd am Geräterahmen 10.2 gehalten ist. Das Planierschild ist gegen die Kraft einer Feder bei einem Auftreffen auf Hindernisse nach hinten auslenkbar.

Hinter dem Mittel 3 folgt dann als Mittel 4 zum Krümeln des Reitbodens 7 eine Krümlerwalze, die über ein Paar von Längslenkern 40 gelenkig mit dem Geräterahmen 10.2 verbunden ist. Die Krümlerwalze 4 rollt dabei unter Belastung durch ihr Eigengewicht und hier mit einer zusätzlichen Federkraftbelastung über den Reitboden 7 ab. Anstelle der Krümlerwalze 4 kann an den Längslenkern 40 bei Bedarf eine Glattwalze, vorzugsweise mit einem Abstreifer, gelagert werden.

Zusätzlich ist das Gerät 1 mit Mitteln zum Befeuchten des Reitbodens 7 ausgestattet. Diese Mittel werden durch hier zwei Düsenanordnungen 5 gebildet, durch welche jeweils mehrere Wasserstrahlen auf und/oder in den Reitboden 7 ausbringbar sind.

Zur Versorgung der Düsenanordnungen 5 mit Wasser dient ein Wasservorratsbehälter 50, der auf einem Tragrahmen 10.1 stehend angebracht ist. Oberseitig besitzt der Behälter 50 eine Füllöffnung mit einem Deckel 50', durch die im offenen Zustand eine Betankung mit einem Wasservorrat möglich ist. Nahe seinem Boden ist an den Wasservorratsbehälter 50 eine erste Wasserleitung 51 in Form eines flexiblen Schlauchs angeschlossen.

Die Wasserleitung 51 führt zu einer am Tragfahrzeug 60 vorgesehenen oder an dessen Zapfwellenantrieb angekuppelten Wasserpumpe 52. In Figur 1 ist diese Wasserpumpe 52 durch eines der Hinterräder des Tragfahrzeugs 6 verdeckt und deshalb in gestrichelten Linien dargestellt. Von der Wasserpumpe 52 führt die Wasserleitung 51 weiter zu einer Einstelleinrichtung 53, mit der das zugeführte Wasser auf zwei weiterführende Wasserleitungen 54, 54' einstellbar verteilt werden kann. Weiterhin ist hier der Einstelleinrichtung 53 eine Anzeigeeinrichtung 53' zur Anzeige des Wasserdrucks und/oder Wasserdurchflusses zugeordnet. Die Einstelleinrichtung 53 mit der zugeordneten Anzeigeeinrichtung 53' ist an einem nach oben verlaufenden Tragarm 13 so angeordnet, dass sie im Griff- und Sichtbereich eines Führers des Tragfahrzeugs 60 liegen. Der Tragarm 13 ist mit dem Tragrahmen 10.1 des Gerätes 1 verbunden.

Die beiden weiterführenden Wasserleitungen 54, 54', die ebenfalls in Form von Schläuchen ausgeführt sind, führen zu einem ersten Düsenrohr 55 und einem zweiten Düsenrohr 55'. Die beiden Düsenrohe 55, 55' verlaufen voneinander beabstandet jeweils quer zur Verfahrrichtung 60 des Gerätes 1 und sind an dessen Geräterahmen 10.2 gehaltert. Das erste Düsenrohr 55 liegt dabei im Bereich der Mittel 2 zum Lockern und Mischen des Reitbodens 7. Die aus den Düsen des ersten Düsenrohrs 55 austretenden Wasserstrahlen 57 gelangen also besonders tief in den hier durch die Mittel 2 tiefgreifend aufgelockerten Reitboden 7.

Das zweite, hintere Düsenrohr 55' liegt hinter den durch die Krümlerwalze gebildeten Mitteln 4 zum Krümeln des Reitbodens 7. Die aus den Düsen dieses zweiten Düsenrohrs 55' austretenden Wasserstrahlen 57' sorgen insbesondere für eine oberflächennahe Befeuchtung des zuvor mechanisch aufbereiteten und geglätteten Reitbodens 7.

Die Düsenrohre 55, 55' sind relativ zum Geräterahmen 10.2 verstellbar, insbesondere um ihre Längsachse verdrehbar, befestigt, so dass die Strahlrichtung der Wasserstrahlen 57, 57' in gewünschter Weise eingestellt und dadurch optimiert werden kann. Außerdem können die einzelnen Düsen austauschbar und/oder einstellbar sein, insbesondere hinsichtlich Wasserstrahl-Kegelwinkel und -Tröpfchengröße, um eine Anpassung an unterschiedliche Anwendungsbedingungen und Reitbodenmaterialien zu ermöglichen. So ist z.B. bei Reitböden aus Sand eine relativ große Tröpfchengröße vorteilhaft, wodurch zugleich die Verdunstung begrenzt wird; bei feinteiligeren Reitböden, die zum Stauben neigen, sind eher kleinere Tröpfchen für eine gute Staubbindung günstig.

Die Düsenrohre 55, 55' verlaufen nur wenige Dezimeter über dem Reitboden 7, sodass das Wasser auf kurzem Wege in den Reitboden 7 gelangt. Eine unerwünschte Verdunstung des Wassers mit der Folge einer unangenehm hohen Luftfeuchtigkeit, insbesondere in geschlossenen Reithallen, wird hierdurch wirksam vermieden.

Wesentlich ist bei dem Gerät 1 gemäß Figur 1, dass es zwei Rahmen aufweist, nämlich den Tragrahmen 10.1, der oben angeordnet ist, und den Geräterahmen 10.2, der darunter angeordnet ist.

Der oben angeordnete Tragrahmen 10.1 trägt den Wasservorratsbehälter 50 mit seiner Füllöffnung 50' mit Deckel sowie die Einstell- und Anzeigeeinrichtung 53, 53' mit den zugehörigen Wasserleitungen 51, 54 und 54'.

Der den Vorratsbehälter 50 tragende obere Tragrahmen 10.1 weist Kupplungselemente 11 auf, die mit einer am Fahrzeug 6 vorhandenen Dreipunktkupplung 61 lösbar verbunden sind. Durch die hydraulisch heb- und senkbare Dreipunktkupplung 61 des Fahrzeugs 6 kann der Tragrahmen 10.1 zusammen mit dem Wasservorratsbehälter 50 gehoben und gesenkt werden.

Der unterhalb des Tragrahmens 10.1 angeordnete Geräterahmen 10.2 ist mittels einer geräteseitigen Anhängerkupplung 11' mit einer fahrzeugsseitig vorgesehen Anhängerkupplung 61' ebenfalls lösbar verbunden. Im dargestellten Ausführungsbeispiel ist die Anhängerkupplung 61' am Fahrzeug 6 als Kugelkopf ausgeführt, wie dies beispielsweise von PKW-Anhängerkupplungen bekannt ist.

Relativ zu dem oberen Tragrahmen 10.1 ist der unten angeordnete Geräterahmen 10.2 um die Anhängerkupplung 11', 61' sowohl in Horizontalrichtung als auch in Vertikalrichtung verschwenkbar.

Eine Verbindung zwischen dem oberen Tragrahmen 10.1 und dem unteren Geräterahmen 10.2 wird hier durch zwei etwa vertikal verlaufende, flexible Hebeelemente 14, hier zwei Ketten, gebildet. Das obere Ende jedes Hebeelements 14 ist an einem vom Tragrahmen 10.1 ausgehenden Ausleger 14' angeschlagen. Das untere Ende der Hebeelemente 14 ist jeweils am Geräterahmen 10.2 befestigt. Durch Verstellung des Tragrahmens 10.1 in eine gewünschte Höhenlage mittels entsprechender Einstellung der höhenverstellbaren Dreipunktkupplung 61 hebt der obere Tragrahmen 10.1 über die Hebeelemente 14 gleichzeitig den Geräterahmen 10.2 in eine gewünschte Höhe, die so für die jeweilige Bearbeitung des Reitbodens 7 abhängig von dessen Beschaffenheit optimal einstellbar ist. Aufgrund ihrer Flexibilität erlauben die Hebeelemente 14 eine ausreichende seitliche Verschwenkbarkeit des Geräterahmens 10.2 mit den daran gehalterten Mitteln 2, 3, 4 relativ zum oberen Tragrahmen 10.1.

Bei Bewegung des Gerätes 1 in seiner Verfahrrichtung gemäß dem Pfeil 60 mit Hilfe des Zugfahrzeugs 6 läuft der Geräterahmen 10.2 mit den daran gehalterten Mitteln 2, 3, 4 und 5 wie ein Einachsanhänger hinter dem Fahrzeug 6 her. Dabei wird das Gewicht des Geräterahmens 10.2 mit den daran gehalterten Mitteln 2 bis 5 zu einem ersten Teil durch die auf dem Reitboden 7 abrollende Krümmlerwalze 4 und zu einem zweiten Teil über die Hebeelemente 14 getragen.

Mit dem Gerät 1 gemäß Figur 1 wird insbesondere erreicht, dass der relativ weit nach hinten über das Heck des Fahrzeugs 6 vorragende Geräterahmen 10.2 bei Kurvenfahrt nicht unerwünscht weit ausschwenkt, sondern aufgrund seiner Verschwenkbarkeit in Horizontalrichtung um die Anhängerkupplung 11', 61' anhängerartig dem Fahrzeug 6 folgt. Hierdurch wird die Führung des Gerätes 1 und des Fahrzeugs 6 vereinfacht und es werden Schäden an Begrenzungen des Reitplatzes 7, wie Banden, oder an anderen Gegenständen auf dem Reitplatz, wie z. B. Hindernissen, vermieden.

Um bei Nichtbenutzung das Gerät 1 sicher und ohne Belastung der Mittel 2, 3, 4 abstellen zu können, sind hier an dem Tragrahmen 10.1 insgesamt vier höhenverstellbare Standfüße 58 vorgesehen. Diese Standfüße 58 sind jeweils in einer Führungshülse 58' vertikal verschiebbar und in gewünschten Höhenlagen fixierbar. In der in Figur 1 dargestellten Einsatzstellung sind die Standfüße 58 soweit nach oben verschoben und in dieser Stellung fixiert, dass sie die Bewegung des Gerätes 1 nicht stören.

Wenn das Gerät 1 nicht benutzt werden soll, wird es zu einem Abstellplatz gefahren. Dort werden die Standfüße 58 gelöst und nach unten bis auf den Untergrund ausgefahren und in dieser Stellung erneut fixiert. Danach kann dann das Gerät 1 durch Lösen der Dreipunktkupplung 11, 61 und der Anhängerkupplung 11', 61' vom Fahrzeug 6 getrennt werden. Das Gerät 1 steht nun eigenständig auf seinen Standfüßen 58, bis es wieder zum Einsatz kommen soll.

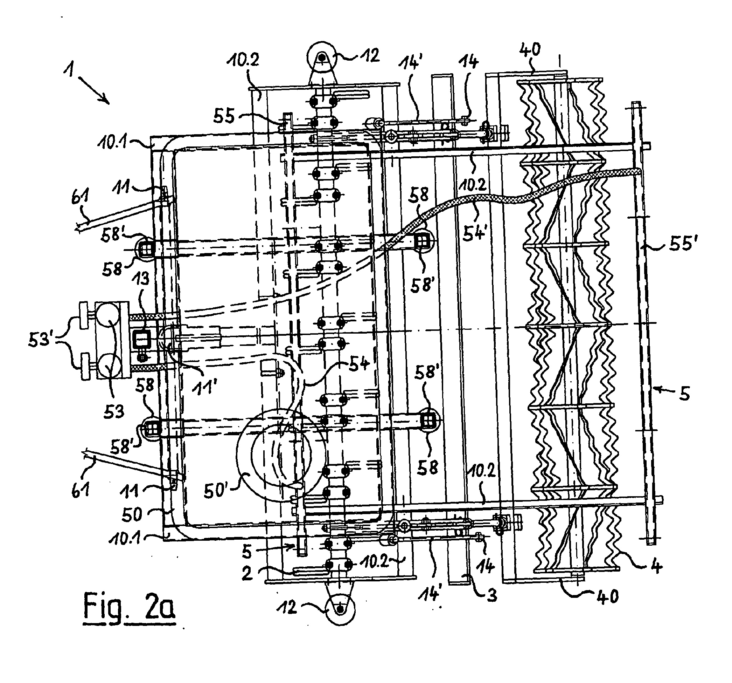

In Figur 2a ist das Gerät 1 aus Figur 1 in Draufsicht bei Geradeausfahrt dargestellt, wobei hier das Fahrzeug 6 nicht dargestellt ist.

Im vorderen Bereich des Gerätes 1, also im linken Bereich der Figur 2a, liegt der obere Tragrahmen 10.1, der den Wasservorratsbehälter 50 trägt. Über die Dreipunktkupplung 11, 61 ist dieser Tragrahmen 10.1 mit dem hier nicht dargestellten Fahrzeug verbunden. Ebenfalls mit dem Rahmen 10.1 verbunden sind die vier Führungshülsen 58', in denen die zugehörigen Standfüße 58 vertikal verschiebbar sind.

Unterhalb des Wasservorratsbehälters 50 liegt die Anhängerkupplung 11' verdeckt, die deshalb in gestrichelten Linien dargestellt ist. Unmittelbar vor, also in Figur 2a links von der Anhängerkupplung 11' liegt oberhalb von dieser der Tragarm 13, der mit dem Tragrahmen 10.1 verbunden ist und der an seinem oberen Ende die Einstell- und Anzeigeeinrichtung 53, 53' im Sicht- und Griffbereich eines Fahrzeugführers trägt.

Unterhalb des Tragrahmens 10.1 sowie hinter diesem, also in Figur 2a im rechten Bereich, liegt der untere Geräterahmen 10.2. Mit diesem Geräterahmen 10.2 ist die Anhängerkupplung 11' verbunden. Mit dem Geräterahmen 10.2 sind weiterhin die Mittel 2, 3 ,4 und 5 zum Lockern, Mischen, Glätten, Krümeln und Befeuchten des Reitbodens 7 verbunden.

Über die Ketten 14, die von den Auslegern 14' nach unten verlaufen, wird ein Teil des Gewichts des Geräterahmens 10.2 mit den daran gehalterten Mitteln 2 bis 5 von dem oberen Tragrahmen 10.1 aufgenommen und über diesen an die Dreipunktkupplung 61 des Fahrzeugs übertragen. Ein weiterer Teils des Gewichts des Geräterahmens 10.2 und der daran gehalterten Mittel 2 bis 5 wird von der hinten am Gerät 1 vorgesehen Krümmlerwalze als Mittel 4 mit ihren beiden Längslenkern 40 aufgenommen.

Über die Schlauchleitungen 54 und 54' werden die Düsenanordnungen 5 an den beiden Düsenrohren 55, 55' mit Wasser versorgt.

Links und rechts, d.h. in Figur 2a unten und oben, ragen die beiden Bandenrollen 12 vom Gerät 1 seitlich vor.

In Figur 2a ist das Gerät 1 bei Geradeausfahrt dargestellt. Hierbei liegen die Längsachsen von Tragrahmen 10.1 und Geräterahmen 10.2 in einer Linie.

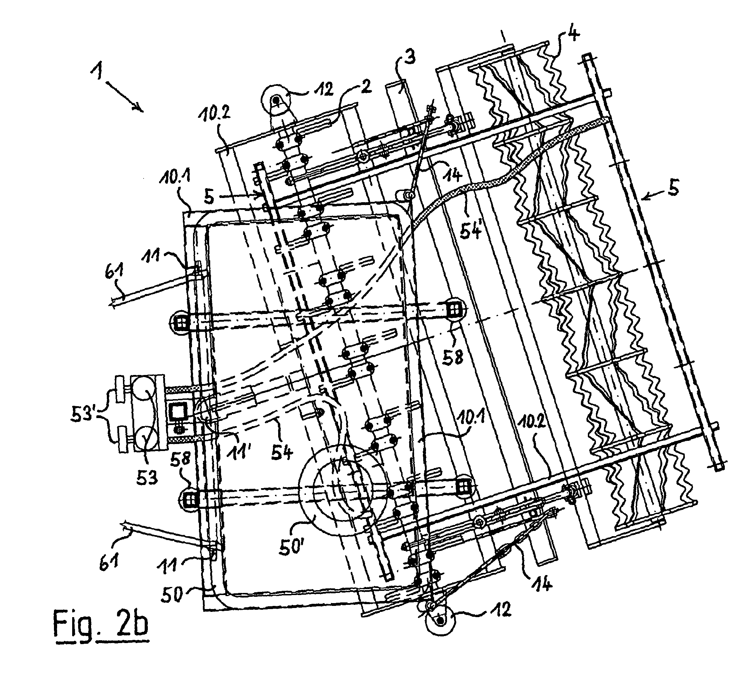

In Figur 2b ist das Gerät 1 bei einer Kurvenfahrt in einer Rechtskurve dargestellt. Der über die Dreipunktkupplung 11, 61 mit dem hier nicht dargestellten Fahrzeug verbundene obere Tragrahmen 10.1 hat die gleiche Ausrichtung wie das Fahrzeug, da eine Verschwenkung des Tragrahmens 10.1 relativ zum Fahrzeug in der Horizontalebene über die Dreipunktkupplung 11, 61 nicht möglich ist.

Im Unterschied dazu hat der untere Geräterahmen 10.2 eine Verschwenkungsfreiheit relativ zum Fahrzeug und auch relativ zum Tragrahmen 10.1 um seine Anhängerkupplung 11'. Bei einer Kurvenfahrt läuft der Geräterahmen 10.2 mit den daran angeordneten Mitteln 2 bis 5 über die Krümmlerwalze 4 wie ein Einachsanhänger hinter dem Fahrzeug her, wobei in der Kurvenfahrt der Geräterahmen 10.2 einen kleineren Radius durchläuft, als dies der Geräterahmen bei einer starren Verbindung zum Tragrahmen 10.1 und zum Fahrzeug täte.

Die flexiblen Hebeelemente 14 in Form der beiden Ketten erlauben die Verschwenkung des Geräterahmens 10.2 relativ zum oberen Tragrahmen 10.1, wie dies aus Figur 2b ersichtlich ist. Gleichzeitig trägt aber immer noch der obere Tragrahmen 10.1 einen Teil des Gewichts des Geräterahmens 10.2 mit den daran angeordneten Mitteln 2 bis 5.

Die Wasserleitungen 54, 54' in Form von Schläuchen passen sich an die Verschwenkung des Geräterahmens 10.2 relativ zum Tragrahmen 10.1 flexibel an.

Durch diese gelenkige Ausführung des Gerätes 1 wird ein ungünstig weites Ausschwenken des hinteren Bereichs des Gerätes 1 bei Kurvenfahrt vermieden.

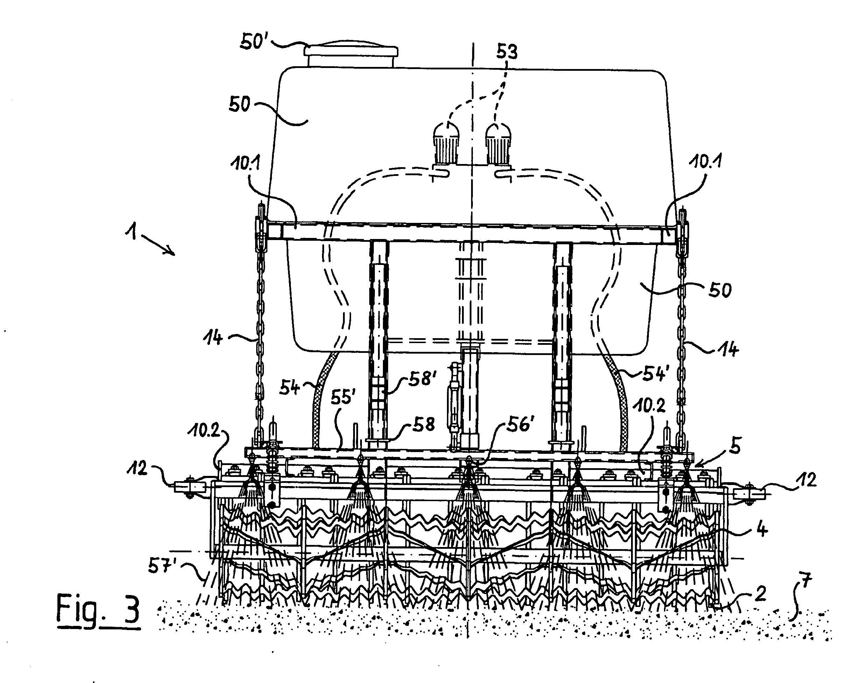

Figur 3 schließlich zeigt das Gerät 1 gemäß den Figuren 1, 2a und 2b in einer Rückansicht, nun wieder bei Geradeausfahrt. Oben in Figur 3 ist der Wasservorratsbehälter 50 mit seiner Füllöffnung 50' mit Deckel erkennbar. Durch den Wasservorratsbehälter 50 verdeckt liegt vor diesem die Einstelleinrichtung 53.

Der Wasservorratsbehälter 50 wird von dem Tragrahmen 10.1 getragen. Vom Tragrahmen 10.1 erstrecken sich die Standfüße 58 nach unten, die in den Führungshülsen 58' verschiebbar sind, die ihrerseits mit dem Tragrahmen 10.1 verbunden sind.

Unter dem Tragrahmen 10.1 und dem Wasservorratsbehälter 50 liegt der Geräterahmen 10.2, an dem die Mittel 2 bis 5 für die Pflege des Reitbodens 7 gehaltert sind. An den dem Betrachter zugewandten hinteren Düsenrohr 55' sind die einzelnen Düsen 56' erkennbar, durch die jeweils ein Wasserstrahl 57' in Richtung zum Reitboden 7 ausbringbar ist. Ganz links und ganz rechts am Geräterahmen 10.2 sind die beiden Bandenrollen 12 sichtbar.

Links und rechts in mittlerer Höhe des Gerätes 1 verlaufen die beiden flexiblen Hebeelemente 14 in Form der Ketten, die einen Teil des Gewichts des Geräterahmens 10.2 mit den daran gehalterten Mitteln 2 bis 5 aufnehmen und über den Tragrahmen 10.1 zu dem hier nicht dargestellten Fahrzeug übertragen. Wie die Figur 3 veranschaulicht, ist eine seitliche Auslenkung des Geräterahmens 10.2 relativ zum Tragrahmen 10.1 aufgrund der Flexibilität der Hebeelemente 14 in einem ausreichend großen Maß möglich. Bei den in der Praxi bei Kurvenfahrten auftretenden Auslenkungen zwischen Geräterahmen 10.2 und Tragrahmen 10.1 ergibt sich nur eine geringe Verkürzung des vertikalen Abstandes zwischen den beiden Rahmen 10.1 und 10.2, wodurch noch keine nennenswerte und die Wirkung des Gerätes 1 beeinträchtigende Veränderung des Abstandes der Mittel 2 bis 5 relativ zum Reitboden 7 entsteht.

## Patentansprüche

1. Gerät (1) für die Pflege von Reitböden (7), insbesondere in Reithallen und auf Reitplätzen, wobei das Gerät (1) mittels eines Zug- oder Tragfahrzeugs (6), an das es ankoppelbar ist, über den Reitboden (7) verfahrbar ist, wobei das Gerät (1) Mittel (2, 3, 4) zum Lockern, Mischen, Glätten, Krümeln und/oder Verdichten des Reitbodens (7) aufweist, wobei das Gerät (1) weiterhin mindestens eine Düsenanordnung (5) aufweist, durch welche während des Verfahrens des Geräts (1) Wasser zum Befeuchten des Reitbodens (7) auf und/oder in diesen ausbringbar ist, und wobei das Gerät (1) in seiner Verfahrrichtung (60) gesehen vorne mit Kupplungselementen (11, 11') ausgestattet ist, die mit wenigstens einer genormten Kupplung (61, 61') des Zug- oder Tragfahrzeugs (6) lösbar verbindbar sind, **dadurch gekennzeichnet,**
- **dass** das Gerät (1) als erstes Kupplungselement eine Dreipunktkupplung (11) aufweist, die geräteseitig mit einem einen Wasservorratsbehälter (50) tragenden, oberen Tragrahmen (10.1) verbunden ist,
- **dass** das Gerät (1) als zweites Kupplungselement eine Anhängerkupplung (11') aufweist, die geräteseitig mit einem die Mittel (2, 3, 4) zum Lockern, Mischen, Glätten, Krümeln und/oder Verdichten des Reitbodens (7) und die Düsenanordnung (5) tragenden, unteren Geräterahmen (10.2), der in seinem hinteren Bereich rollend auf dem Untergrund abstützbar ist, verbunden ist, und
- **dass** der untere Geräterahmen (10.2) relativ zum oberen Tragrahmen (10.1) in Horizontal- und Vertikalrichtung um die Anhängerkupplung (11') verschwenkbar ist.

2. Gerät nach Anspruch 1, **dadurch gekennzeichnet, dass** der Tragrahmen (10.1) mittels der Dreipunktkupplung (11, 61) vom Zug- oder Tragfahrzeug (6) aus höhenverstellbar ist und dass vom Tragrahmen (10.1) mindestens ein flexibles Hebeelement (14), vorzugsweise eine Kette oder ein Seil, nach unten zum Geräterahmen (10.2) geführt ist.

3. Gerät nach Anspruch 1 oder 2, **dadurch gekennzeichnet, dass** der Wasservorratsbehälter (50) über eine Wasserleitung (51, 54, 54') in Form mindestens eines flexiblen Schlauchs mit der Düsenanordnung (5) verbunden ist.

4. Gerät nach Anspruch 3, **dadurch gekennzeichnet, dass** im Verlauf der Wasserleitung (51, 54, 54') zwischen dem Wasservorratsbehälter (50) und der Düsenanordnung (5) eine Wasserpumpe (52) vorgesehen ist.

5. Gerät nach Anspruch 3, **dadurch gekennzeichnet, dass** der Wasservorratsbehälter (50) dicht verschließbar und durch eine Luftpumpe unter Druck setzbar ist.

6. Gerät nach Anspruch 4 oder 5, **dadurch gekennzeichnet, dass** die Wasserpumpe (52) oder die Luftpumpe vom Zug- oder Tragfahrzeug (6) antreibbar ist.

7. Gerät nach einem der vorhergehenden Ansprüche, **dadurch gekennzeichnet, dass** der Druck des der Düsenanordnung (5) zugeführten Wassers und/oder die Menge des von der Düsenanordnung (5) ausgebrachten Wassers durch eine Einstelleinrichtung (53) regulierbar sind/ist.

8. Gerät nach Anspruch 7, **dadurch gekennzeichnet, dass** der Einstelleinrichtung (53) eine Anzeigeeinrichtung (53') zur Anzeige des Wasserdrucks und/oder der Wasserdurchflußmenge zugeordnet ist.

9. Gerät nach Anspruch 7 oder 8, **dadurch gekennzeichnet, dass** die Einstelleinrichtung (53) im Griffbereich und/oder die Anzeigeeinrichtung (53') im Sichtbereich einer das Gerät (1) oder das zugehörige Zug- oder Tragfahrzeug (6) führenden Bedienungsperson angeordnet ist.

10. Gerät nach einem der vorhergehenden Ansprüche, **dadurch gekennzeichnet, dass** die Düsenanordnung (5) durch mindestens ein quer zur Verfahrrichtung (60) des Geräts (1) verlaufendes Düsenrohr (55, 55') mit mehreren in Rohrlängsrichtung voneinander beabstandet angeordneten Düsen (56, 56') gebildet ist.

11. Gerät nach Anspruch 10, **dadurch gekennzeichnet, dass** die Düsen (56, 56') individuell in ihrer Strahlform und/oder Strahlrichtung einstellbar sind.

12. Gerät nach Anspruch 10 oder 11, **dadurch gekennzeichnet, dass** es zwei oder mehr in Verfahrrichtung (60) des Geräts (1) voneinander beabstandete, parallel zueinander verlaufende Düsenrohre (55, 55') aufweist.

13. Gerät nach Anspruch 12, **dadurch gekennzeichnet, dass** ein erstes Düsenrohr (55) im Bereich der Mittel (2) zum Lockern und/oder Mischen des Reitbodens (7) und ein zweites Düsenrohr (55') im Bereich der Mittel (4) zum Krümeln des Reitbodens (7) angeordnet ist.

14. Gerät nach einem der Ansprüche 10 bis 13, **dadurch gekennzeichnet, dass** das/jedes Düsenrohr (55, 55') relativ zum übrigen Gerät (1) in seiner Lage und/oder Ausrichtung verstellbar und in einer gewünschten Lage und/oder Ausrichtung fixierbar ist.

15. Gerät nach einem der vorhergehenden Ansprüche, **dadurch gekennzeichnet, dass** das Gerät (1) in seiner Verfahrrichtung (60) gesehen von vorne nach hinten aufeinander folgend mindestens eine Reihe von federnden, höheneinstellbaren Striegelzinken als Mittel (2) zum Lockern und Mischen des Reitbodens (7), ein pendelnd aufgehängtes, höhenverstellbares Planierschild als Mittel (3) zum Glätten des Reitbodens (7) und entweder eine an Längslenkern (40) geführte, nachlaufende Krümlerwalze als Mittel (4) zum Krümeln des Reitbodens (7) oder eine an Längslenkern (40) geführte, nachlaufende Glattwalze als Mittel (4) zum weiteren Glätten und Verdichten des Reitbodens (7) aufweist.

16. Gerät nach Anspruch 15, **dadurch gekennzeichnet, dass** die als Mittel (4) zum weiteren Glätten und Verdichten des Reitbodens (7) dienende Glattwalze mit mindestens einem Abstreifer ausgestattet ist.

## Claims

1. An apparatus (1) for the maintenance of riding grounds (7), in particular in indoor riding arenas and outdoor riding arenas, wherein the apparatus (1) can be coupled to a towing or supporting vehicle (6) and moved across the riding ground (7) by means thereof, wherein the apparatus (1) comprises means (2, 3, 4) for loosening, mixing, smoothing, crumbling and/or compacting the riding ground (7), wherein the apparatus (1) furthermore comprises at least one nozzle arrangement (5) through which water for moistening the riding ground (7) can be applied onto and/or into said riding ground (7) while the apparatus (1) is being moved, and wherein, as seen in its direction of movement (60), the apparatus (1) is provided at its front with coupling elements (11, 11') which can be connected to at least one standardized coupling (61, 61') of the towing or supporting vehicle (6) in a detachable manner,
**characterized in that**
- the apparatus (1) comprises as a first coupling element a three-point coupling (11) which is connected to an upper supporting frame (10.1) on the side of said apparatus (1), said supporting frame (10.1) supporting a water reservoir (50),
- that the apparatus (1) comprises as a second coupling element a towing coupling (11') which is connected to a lower device frame (10.2) on the side of said apparatus (1), wherein said device frame (10.2) supports the means (2, 3, 4) for loosening, mixing, smoothing, crumbling and/or compacting the riding ground (7) and the nozzle arrangement (5) and, while rolling, can be rested on the ground in its rear region, and
- that the lower device frame (10.2) can be swivelled about the towing coupling (11') in horizontal and vertical direction in relation to the upper supporting frame (10.1).

2. The apparatus according to Claim 1, **characterized in that,** by means of the three-point coupling (11, 61), the supporting frame (10.1) can be vertically adjusted from the towing or supporting vehicle (6) and that at least one flexible lifting element (14), preferrably a chain or a rope, is routed from the supporting frame (10.1) down to the device frame (10.2).

3. The apparatus according to Claim 1 or 2, **characterized in that** the water reservoir (50) is connected to the nozzle arrangement (5) through a water supply line (51, 54, 54') having the form of at least one flexible tube.

4. The apparatus according to Claim 3, **characterized in that,** in the course of the water supply line (51, 54, 54'), a water pump (52) is provided between the water reservoir (50) and the nozzle arrangement (5).

5. The apparatus according to Claim 3, **characterized in that** the water reservoir (50) can be closed tightly or can be pressurized by means of an air pump.

6. The apparatus according to Claim 4 or 5, **characterized in that** the water pump (52) or the air pump can be driven from the towing or supporting vehicle (6).

7. The apparatus according to anyone of the preceding claims, **characterized in that** the pressure of the water supplied to the nozzle arrangement (5) and/or the volume of the water applied by the nozzle arrangement (5) can be regulated by means of an adjusting device (53).

8. The apparatus according to Claim 7, **characterized in that** an indicating device (53') for indicating the water pressure and/or the water flow volume is allocated to the adjusting device (53).

9. The apparatus according to Claim 7 or 8, **characterized in that** the adjusting device (53) is arranged in the range of reach of an operator controlling the apparatus (1) or the associated towing or supporting vehicle (6) and/or the indicating device (53') is arranged in the range of vision of said operator.

10. The apparatus according to anyone of the preceding claims, **characterized in that** the nozzle arrangement (5) is formed by at least one nozzle pipe (55, 55') which extends in transverse direction in relation to the direction of movement (60) of the apparatus (1) and comprises a plurality of nozzles (56, 56') arranged spaced apart from each other as seen in the longitudinal direction of said pipe.

11. The apparatus according to Claim 10, **characterized in that** the nozzles (56, 56') can be individually adjusted in their jet shape and/or their jet direction.

12. The apparatus according to Claim 10 or 11, **characterized in that** it comprises two or more nozzle pipes (55, 55') arranged spaced apart from each other in the direction of movement (60) of the apparatus (1) and extending in parallel to each other.

13. The apparatus according to Claim 12, **characterized in that** a first nozzle pipe (55) is arranged in the vicinity of the means (2) for loosening and/or mixing the riding ground (7) and a second nozzle pipe (55') is arranged in the vicinity of the means (4) for crumbling the riding ground (7).

14. The apparatus according to anyone of Claims 10 to 13, **characterized in that,** in relation to the remaining apparatus (1), the/each nozzle pipe (55, 55') can be adjusted in its position and/or its orientation and can be located in its desired position and/or orientation.

15. The apparatus according to anyone of the preceding claims, **characterized in that**, as seen in its direction of movement (60), the apparatus (1) comprises successively from its front to its rear at least one row of springy and vertically adjustable curry comb prongs as means (2) for loosening and mixing the riding ground (7), a vertically adjustable pusher blade with pendulum suspension as means (3) for smoothing the ridings ground (7), and either a following crumble roller guided on longitudinal control arms (40) as means (4) for crumbling the riding ground (7) or a following smooth roller guided on longitudinal control arms (40) as means (4) for further smoothing and compacting the riding ground (7).

16. The apparatus according to Claim 15, **characterized in that** the smooth roller serving as means (4) for further smoothing and compacting the riding ground (7) is provided with at least one stripping device.

## Revendications

1. Appareil (1) pour l'entretien de terrains d'équitation (7), notamment dans des manèges couverts et sur des manèges, l'appareil (1) pouvant être déplacé au-dessus du terrain d'équitation (7) au moyen d'un véhicule à traction ou porteur (6) auquel il peut être accouplé, l'appareil (1) présentant des moyens (2, 3, 4) pour assouplir, mélanger, lisser, émietter et/ou compacter le terrain d'équitation (7), l'appareil (1) présentant en outre au moins un agencement de buses (5) à travers lequel de l'eau pour mouiller le terrain d'équitation (7) peut être épandue sur et/ou dans celui-ci pendant le déplacement de l'appareil (1), et l'appareil (1), vu dans sa direction de déplacement (60), étant équipé à l'avant d'éléments d'accouplement (11, 11') qui peuvent être reliés de manière amovible à au moins un accouplement standardisé (61, 61') du véhicule à traction ou porteur (6), **caractérisé en ce**
- **que** l'appareil (1) présente en tant que premier élément d'accouplement un attelage à trois points (11) qui est relié du côté de l'appareil à un cadre porteur supérieur (10.1) portant un réservoir d'eau (50),
- **que** l'appareil (1) présente en tant que deuxième élément d'accouplement un dispositif d'attelage de remorque (11') qui est relié du côté de l'appareil à un cadre d'appareil inférieur (10.2) portant les moyens (2, 3, 4) pour assouplir, mélanger, lisser, émietter et/ou compacter le terrain d'équitation (7) et l'agencement de buses (5) qui peut s'appuyer dans sa région arrière en roulant sur le sous-sol, et
- **que** le cadre d'appareil inférieur (10.2) peut pivoter par rapport au cadre porteur supérieur (10.1) dans la direction horizontale et verticale autour du dispositif d'attelage de remorque (11').

2. Appareil selon la revendication 1, **caractérisé en ce que** le cadre porteur (10.1) est réglable en hauteur au moyen de l'attelage à trois points (11, 61) depuis le véhicule à traction ou porteur (6) et qu'au moins un élément de levage flexible (14), de préférence une chaîne ou un câble, est guidé par le cadre porteur (10.1) vers le bas vers le cadre d'appareil (10.2).

3. Appareil selon la revendication 1 ou 2, **caractérisé en ce que** le réservoir d'eau (50) est relié par le biais d'une conduite d'eau (51, 54, 54') sous la forme d'au moins un tuyau flexible à l'agencement de buses (5).

4. Appareil selon la revendication 3, **caractérisé en ce qu'**une pompe à eau (52) est prévue dans l'étendue de la conduite d'eau (51, 54, 54') entre le réservoir d'eau (50) et l'agencement de buses (5).

5. Appareil selon la revendication 3, **caractérisé en ce que** le réservoir d'eau (50) peut être fermé de manière étanche et être mis sous pression par une pompe à air.

6. Appareil selon la revendication 4 ou 5, **caractérisé en ce que** la pompe à eau (52) ou la pompe à air peut être entraînée par le véhicule à traction ou porteur (6).

7. Appareil selon l'une quelconque des revendications précédentes, **caractérisé en ce que** la pression de l'eau amenée à l'agencement de buses (5) et/ou la quantité de l'eau épandue par l'agencement de buses (5) peut/peuvent être régulée(s) par un dispositif de réglage (53).

8. Appareil selon la revendication 7, **caractérisé en ce qu'**un dispositif d'affichage (53') pour l'affichage de la pression d'eau et/ou du débit d'eau est associé au dispositif de réglage (53).

9. Appareil selon la revendication 7 ou 8, **caractérisé en ce que** le dispositif de réglage (53) est disposé à portée de main et/ou le dispositif d'affichage (53') dans la zone visible d'un opérateur guidant l'appareil (1) ou le véhicule à traction ou porteur associé (6).

10. Appareil selon l'une quelconque des revendications précédentes, **caractérisé en ce que** l'agencement de buses (5) est formé par au moins une lance (55, 55') s'étendant de manière transversale à la direction de déplacement (60) de l'appareil (1) avec plusieurs buses (56, 56') disposées de manière écartée les unes des autres dans la direction longitudinale de la lance.

11. Appareil selon la revendication 10, **caractérisé en ce que** les buses (56, 56') peuvent être réglées individuellement dans leur forme de jet et/ou direction de jet.

12. Appareil selon la revendication 10 ou 11, **caractérisé en ce qu'**il présente deux lances (55, 55') écartées l'une de l'autre dans la direction de déplacement (60) de l'appareil (1), s'étendant parallèlement l'une à l'autre, ou plus.

13. Appareil selon la revendication 12, **caractérisé en ce qu'**une première lance (55) est disposée dans la région du moyen (2) pour assouplir et/ou mélanger le terrain d'équitation (7) et une deuxième lance (55') est disposée dans la région du moyen (4) pour émietter le terrain d'équitation (7).

14. Appareil selon l'une quelconque des revendications 10 à 13, **caractérisé en ce que** la/chaque lance (55, 55') peut être déplacée par rapport au reste de l'appareil (1) dans sa position et/ou son orientation et peut être fixée dans une position et/ou orientation souhaitée(s).

15. Appareil selon l'une quelconque des revendications précédentes, **caractérisé en ce que** l'appareil (1), vu dans sa direction de déplacement (60), présente de l'avant vers l'arrière de manière successive au moins une série de pointes d'étrille élastiques, réglables en hauteur en tant que moyen (2) pour assouplir et mélanger le terrain d'équitation (7), une lame niveleuse suspendue en oscillant, réglable en hauteur en tant que moyen (3) pour lisser le terrain d'équitation (7) et soit un rouleau émotteur courant, guidé le long de guidons longitudinaux (40) en tant que moyen (4) pour émietter le terrain d'équitation (7), soit un rouleau de lissage courant, guidé le long de guidons longitudinaux (40) en tant que moyen (4) pour lisser et compacter le terrain d'équitation (7) davantage.

16. Appareil selon la revendication 15, **caractérisé en ce que** le rouleau de lissage servant de moyen (4) pour lisser et compacter le terrain d'équitation (7) davantage est équipé d'au moins un racloir.
